# EUROPEAN PATENT APPLICATION

(11) **EP 2 258 156 A1**
(43) Date of publication of application: **08.12.2010**
(21) Application number: 10164942.4
(22) Date of filing: 04.06.2010
(51) Int. Cl.: A01B 13/14, A01B 15/00, A01B 15/02

(54) **Improvements to mouldboard ploughs**

(30) Priority: 05.06.2009 GB 0909750
(71) Applicant: Wright, Philip, Boston, Lincolnshire PE21 7EX (GB); Packe-Drury-Lowe, Rita, Seagrave Loughborough Leicestershire (GB)
(72) Inventor: Wright, Philip, Lincolnshire PE21 7EX (GB); Packe-Drury-Lowe, Simon, Loughborough LE12 7LU (GB)
(74) Representative: Croston, David

(57) **Abstract**

A plough (10) has a leg (14), and a point (22), a share (24), a mouldboard (26), a landside (28) and a blade (30) all mounted directly or indirectly to the leg (14), the share (24) being arranged to cut the soil on one side of the plough (10), the blade (30) being arranged to cut soil on the other side of the plough (10), and the blade (30) being arranged to extend from a fore-aft position level with or forward of the leg (14).

## Description

The invention relates to ploughs, particularly although not exclusively limited to mouldboard ploughs.

Mouldboard ploughs have been used for many years as the primary tillage means to dispose of plant residues, weeds and weed seeds by inverting the soil and burying them. In turn, fresh soil brought to the surface could be cultivated to form the next seed bed for a following crop.

Farming systems throughout the world have adopted reduced or minimum tillage to help reduce the cost of crop establishment and the time taken to create a seed bed. Many soils can be drilled directly after a non-inversion cultivation, eliminating the need to break down large clods created by the ploughing action. Inverting the soil brings up larger aggregates from depth and these then need to be cultivated to reduce the aggregate size to a point at which seeds can be sown into the tilth. The aggressive cutting and inverting action of the plough on the soil requires high pressure and soil is subjected to shearing and compression forces. When subjected to such forces, soil can form into large clods which require additional operations to break them down into a seed bed. On other than light, easy working land, the cost of ploughing and cultivation thereafter can be prohibitive and is certainly higher than non-plough techniques.

However, non-plough techniques suffer from some problems. Weeds present on or near the surface remain there and if not treated with herbicides can interfere with the subsequent crop. Also, plant residue remaining on the surface can harbour deceases and pests to carry over and effect the next crop, especially where crop rotation is not widely employed.

It is an object of the invention to provide an improved plough.

In one of its broadest aspects, the invention relates to pre-cutting of ground to be ploughed by a blade on a preceding plough to a depth and/or width less than the depth and/or width of the cut by the ploughshare.

According to a second aspect of the invention, there is provided a plough comprising a leg, and a point, a share, a mouldboard, a landslide and a blade all mounted directly or indirectly to the leg, the share being arranged to cut the soil on one side of the plough, the blade being arranged to cut soil on the other side of the plough, and the blade being arranged to extend from a fore-aft position level with or forward of the leg.

The blade causes a cutting and upward loosening and fissuring of the soil on the opposite side of the plough from the share. That portion of the soil then requires less lifting and cutting by a following plough.

Preferably, the width of soil cut by the blade is less than the width of the soil cut by the share.

The blade may be fixedly mounted to the landslide. Alternatively, the blade may be releasably and replacably mounted to the landslide.

According to a third aspect of the invention there is provided a plough comprising a plough body having upper and lower ends, the body having a point, a share extending from one side of the body, a mouldboard arranged on said one side of the body and a landslide on the other side of the body, the plough further comprising a blade arranged to cut soil on the other side of the body, the cutting edge of the share being arranged closer to the lower end of the body than the cutting edge of the blade, the blade being arranged such that the width of the soil cut by it is less than the width of the soil cut by the share.

This principle of leading pre-cultivation ahead of a deeper cultivation providing progressive loosening to depth imposes lower forces on the plough body as the following plough has to do less work in cutting and inverting the soil than without the pre-cutting by the blade. The upward fissuring created by this cutting action can assist in breaking the soil into smaller clods if the soil is in a friable or dryer state. The provision of the blade also serves to counteract the torque imposed on the plough by the soil acting on the share.

In a preferred embodiment of the third aspect, the blade is mounted to the landslide, either fixedly or releasably and replacably.

In accordance with any of the preceding aspects, the depth of the blade relative to the plough body is variable. The blade and/or landslide may include a plurality of mounting formations to define different mounting positions for the blade between the upper and lower end of the plough body.

The angle of the blade relative to the plough body is preferably variable. In that way, the angle of attack of the blade through the soil can be altered.

The blade preferably has a straight cutting edge. The straight cutting edge may be arranged perpendicular relative to the ploughing direction. Alternatively, the blade may be swept relative to the ploughing direction, most preferably swept rearwardly.

The width of soil cut by the blade is preferably 40-95% of the width of soil cut by the share. The depth of cut effected by the blade is preferably 40-95% of the depth of cut effected by the share.

According to a fourth aspect of the invention, there is provided a method of ploughing soil comprising the steps of:
providing a plough having a plough body, a point, a share, a mouldboard and a blade,
drawing the plough through the soil,
penetrating soil with the point,
cutting soil on one side of the plough body with the share to a first depth and width,
pushing laterally and inverting the soil cut by the share with the mouldboard,
simultaneously with cutting the soil on said one side with the share, cutting soil on the other side of the plough body with the blade to a second depth and width, the second depth and width being less than the first depth and width respectively.

A plough in accordance with the invention will now be described in detail by way of example and with reference to the accompanying drawings, in which:-
Fig.1 is a perspective view of a plough in accordance with the invention,
Fig.2 is a perspective view of two ploughs in accordance with the invention shown working the soil,
Fig.3a is a perspective view of a landslide and blade for use in a plough in accordance with the invention,
Fig.3b is a view similar to Fig.3a showing an alternative landslide and blade,
Fig.3c is a view similar to Figs.3a and 3b showing a further alternative landslide and blade,
Fig.3d is a view similar to Figs.3a to 3c showing a still further alternative landslide and blade,
Fig.4 is a plan view of a plough arrangement having a series of ploughs in accordance with the invention,
Fig.5 is a schematic side section of the plough of Fig.1 showing only the blade and share, and
Fig.6 is a perspective view of part of an alternative plough in accordance with the invention.

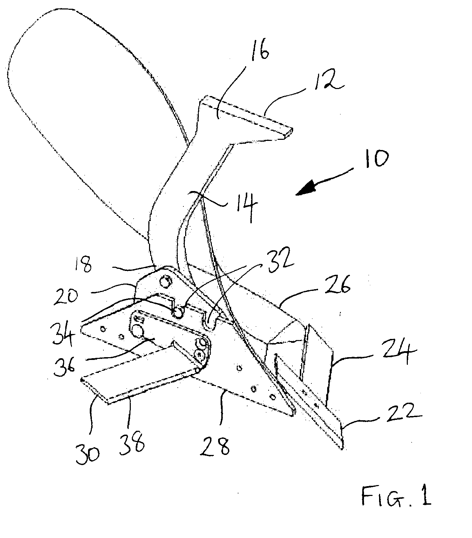

In Fig.1, a plough 10 comprises a plough body 12. The plough body 12 is in the form of an elongate leg 14 having an upper end 16 for mounting to a plough chassis (not shown) and a lower end 18 to which a plough foot 20 is secured. The plough foot 20 has multiple mounting points allowing other parts of the plough to be mounted thereto.

The plough further comprises a point 22, a share 24, a mouldboard 26, a landslide 28 and a blade 30.

The point 22 comprises an elongate angled plate with a sharpened leading edge to act as a cutting point for the soil. The share 24 is mounted to the point 22. The share 24 comprises an elongate plate which is swept rearwardly from the point 22 relative to the direction of ploughing. The share is angled upwardly relative to the ploughing direction so that soil impinging on the front face of the share is forced upwardly. The point 22 and share 24 assembly is mounted to one side of the plough foot 20. The mouldboard 26 is also mounted to that side of the plough foot 20 and the point/share assembly and mouldboard 26 are mounted relative to each other so that soil impinging the share 24 is forced upwardly along the front face of the share 24 and then encounters the face of the mouldboard 26 which pushes the cut soil to one side and inverts it.

The landslide 28 is mounted to plough foot 20 on the opposite side to the side on which the points/share assembly and mouldboard 26 are mounted. The landslide 28 carries the blade 30 which is mounted to the landslide and projects laterally outwardly from the landslide 30 in a direction opposite to the direction of the share 24.

The landslide 28 has a trapezoid form with two U-shaped cut outs 32 from the upper edge. The cut outs 32 can receive a mounting lug 34 on the plough foot 20. The landslide 28 is mounted to the plough foot 20 with the long edge of the trapezoid shape at the base and the short edge at the top and with the slanted faces pointing fore and aft of the plough direction.

The blade 30 comprises a mounting plate 36 and a projecting blade portion 38. The mounting plate 36 has several apertures to allow passage of a fastener to fasten the plate 36 to the landslide 28. Optionally, the fastener may fasten the plate 36 to the landslide 28 and the plough foot 20.

The blade portion 38 has a leading edge which extends perpendicularly relative to the direction of ploughing and the remainder of the blade portion 38 is inclined upwardly relative to the leading edge so that soil cut by the leading edge is then pushed upwardly by the remainder of the blade portion 38. The angular inclination of the blade portion 38 is less than the angle of inclination of the share 24 in this embodiment although the blade could have the same angle of inclination or even a greater angle than the share.

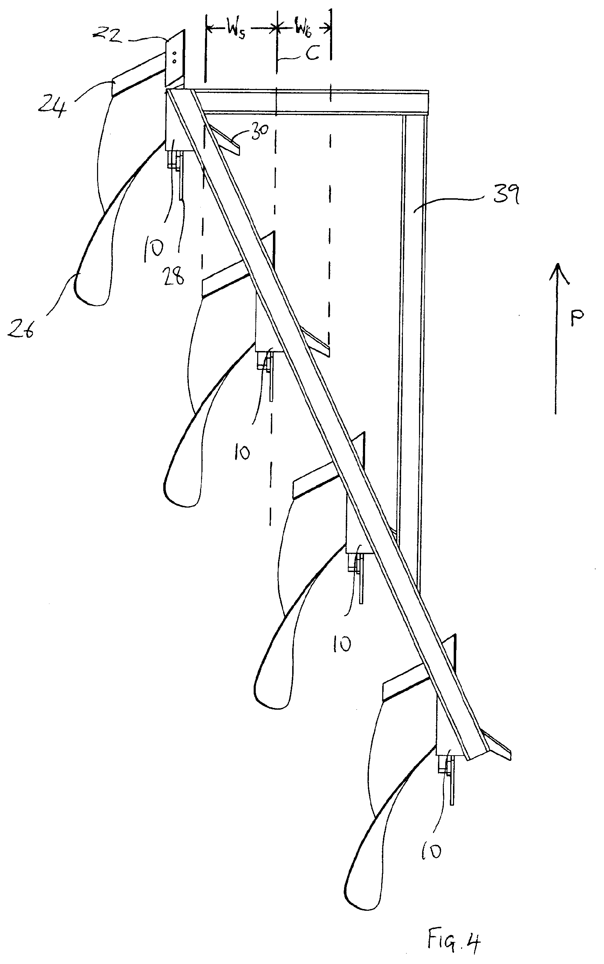

Turning to the plan view of the plough 10 in Fig.4, a series of four ploughs in accordance with the invention are mounted in a staggered arrangement on a plough chassis 39, typically trailed behind a tractor. The direction of ploughing is indicated by the arrow P. Using the tip of the point 22 as a notional centreline C, it can be seen that the length and arrangement of the share is such that it cuts a width of soil Wₛ from the centreline C and at the length of the blade 38 is such that it cuts a width of soil W_{b} from the centreline. The share cut width Wₛ is greater than the blade cut width W_{b}. Preferably W_{b} is 40-95% of Wₛ, most preferably 70%.

The action of the soil on the blade 30 partially counteracts the torque applied by the soil acting on the share 24.

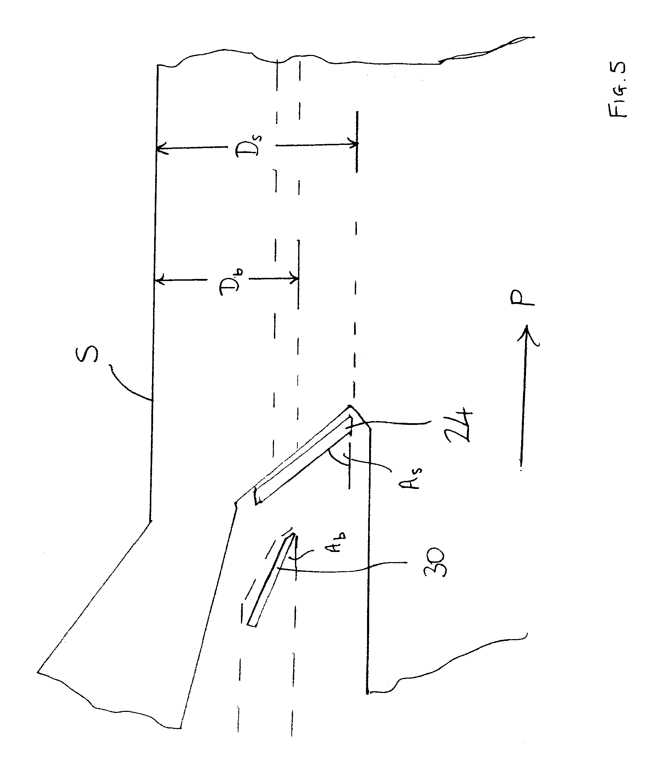

Fig.5 is a schematic side sectional view showing just the share 24 and the blade 30 passing through the soil. The soil has a surface S. The plough direction is indicated by arrow P. The share 24 cuts to depth Dₛ and the blade 30 cuts to a depth D_{b}. It can be seen that Dₛ is greater than D_{b}. Again, D_{b} is preferably in the range 40-95% of Dₛ, most preferably 50%. Also, it can be seen that the angle of inclination of the share 24 As is greater than the angle of inclination of the blade A_{b}. The angle of the share As is preferably in the range 15-30° and the angle of the blade A_{b} is preferably in the range 5-15°.

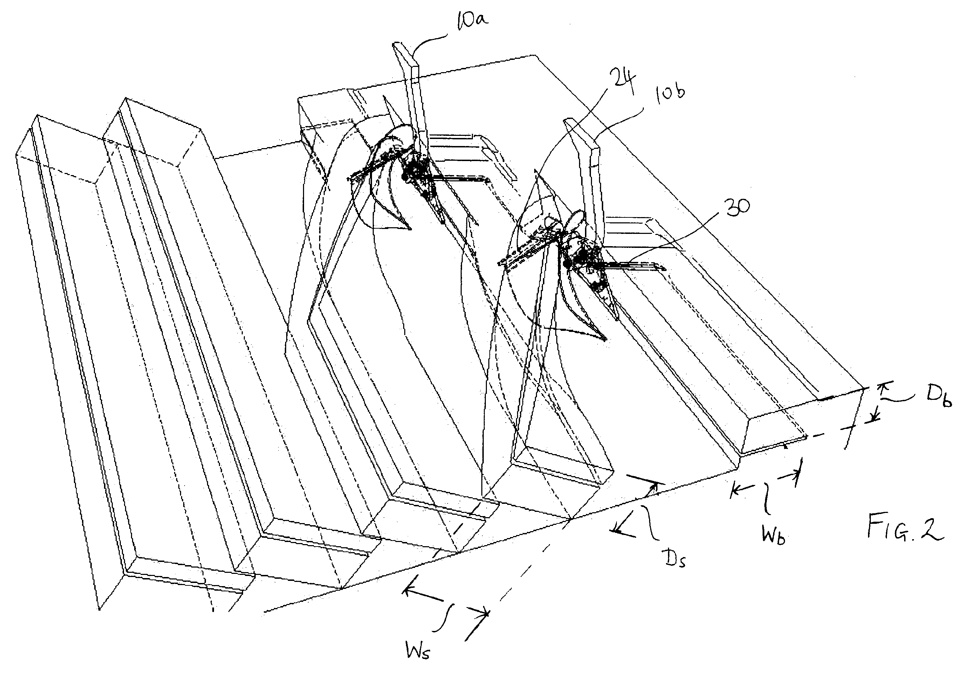

Fig.2 illustrates the action of the plough in accordance with the present invention. In Fig.2, two such ploughs 10 are shown. The ploughs will typically be mounted to a plough chassis (not shown). The first plough 10a is the leading plough arranged ahead of and to one side of a trailing plough 10b. The lateral spacing of the ploughs 10a, 10b defines the furrow width.

As can be seen in Fig.2, the point 22 of the leading plough 10a penetrates the soil ahead of it and the share 24 cuts and lifts the soil at a depth Dₛ. The width of soil cut by the share Wₛ is less than the furrow width by a small amount. As the plough 10a moves through the soil, soil cut by the share is forced to invert by the mouldboard 26 using the fixed soil ahead of the plough to provide a resisting force that is necessary. Uncut soil to the side of the share acts as a hinge to allow the force imposed by the mouldboard to invert the furrow slice and force it laterally into the previously cut furrow. The landslide 28 runs along the freshly cut furrow edge to resist the side forces imposed by the mouldboard. The blade 30 cuts into the freshly cut furrow edge at a blade cut depth D_{b} and a blade cut width W_{b} less than the share cut depth Dₛ and the share cut width Wₛ. The trailing plough 10b then cuts a fresh furrow using its point, share and mouldboard. Because the soil of that furrow has already been cut by the passage of the blade 30 on plough 10a, albeit to a lesser depth and width, less force is required to be exerted by the share in order to cut and lift the soil. Likewise, less force is required to be exerted by the mouldboard. Pre-cutting by the blade also has the effect, when the soil strip is cut pushed laterally and inverted by the trailing plough of reducing the aggregate size of the uppermost soil portion.

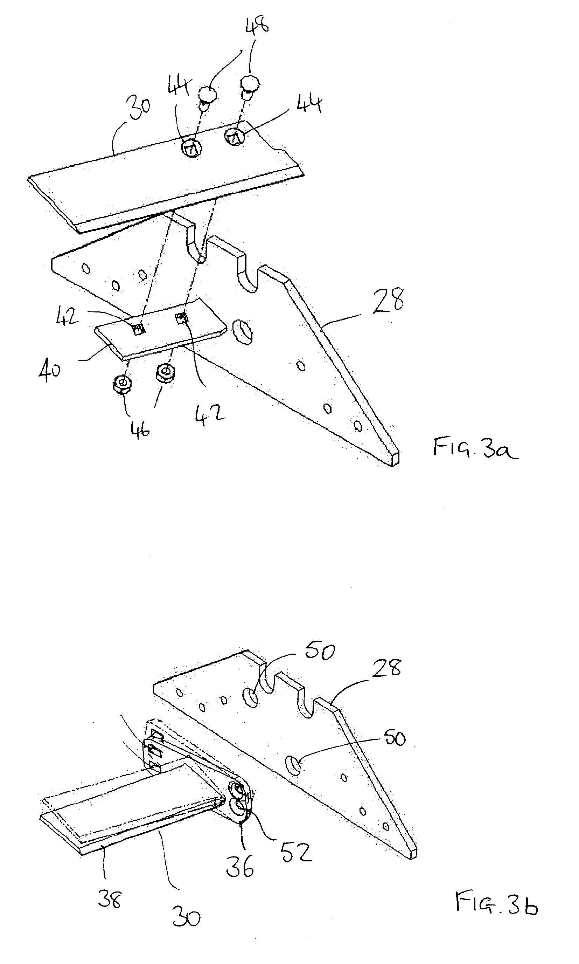

Figs.3a to 3d illustrate various alternative landslide 28 and blade 30 arrangements.

In Fig.3a, a landslide 28 has an integral blade support 40 fixed to it, for example by welding. The blade support 40 has a pair of apertures 42 and the blade 30 has a corresponding pair of apertures 44, allowing the blade 30 to be secured to the blade support 40 by means of a fastener, for example nuts and bolts.

In Fig.3b the landslide is provided with a pair of blade mounting apertures 50. The blade 30 comprises a mounting plate 36 similar to that shown in Fig.1 and a blade portion 38 projecting therefrom. The mounting plate 36 has a single aperture 52 at the forward end thereof and a pair of apertures 54a, b at the rearward end thereof. This allows the blade to be arranged in one of two angular orientations relative to the landslide 28. The mounting plate 36 is mounted to the landslide 28 by passing a fastener, for example a nut and bolt or rivet through the forward aperture 52 in the mounting plate 36 and the forward most aperture 50 in the landslide 28. A fastener can then be arranged through either of the two rearward apertures 54a, b in the mounting plate 36 and the rearward most aperture 50 in the landslide 28. The two angular orientations of the blade 30 are shown in Fig.3b, one in phantom.

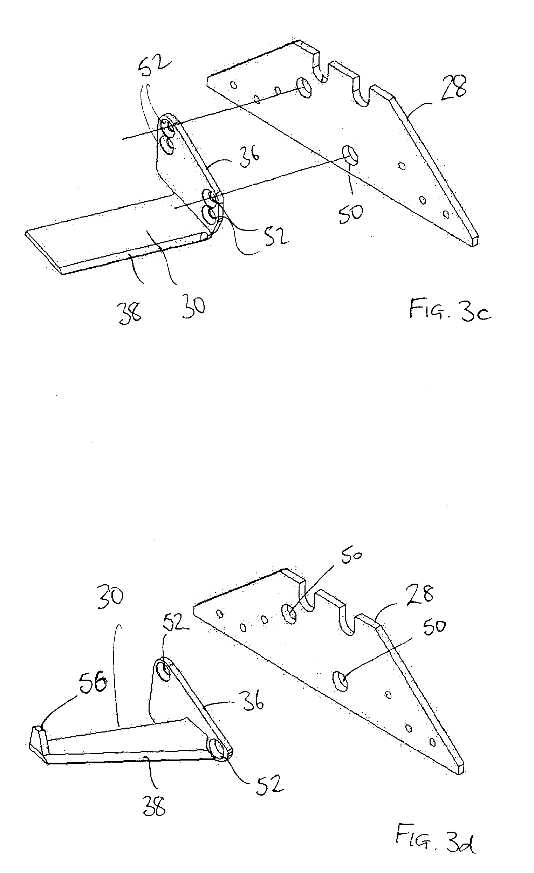

The arrangement in Fig.3c is similar to that in Fig.3b except the mounting plate 36 is provided with upper and lower apertures at both forward and rearward positions. This enables the blade to be positioned in one of two vertical positions relative to the landslide 28. Also, the angular orientation of the blade can be selected as shown in Fig.3b if the apertures are formed as a slot as shown in Fig.3b.

In Fig.3d, an alternative configuration of blade 30 is shown. As in Figs.1, 3b and 3c, the blade 30 comprises a mounting plate 36 and the blade portion 38. The blade portion 38 has a swept form so that the leading edge of the blade portion 38 sweeps rearwardly from the mounting plate 36 towards the end of the blade portion 38. The blade portion 38 is also provided with a wing tip 56 at the free end thereof projecting upwardly. The wing tip 56 provides a degree of lateral stability of the blade and also effects a small upward cut in the soil portion cut by the blade 30.

Various other configurations of blade can be envisaged. For example, the angle of sweep of the blade could be variable. Although we have illustrated the blade has having a straight cutting edge, it may be preferable to provide a profiled cut, for example in a wave form or a zig zag form. In addition to varying the angular orientation of the blade relative to the landslide and the vertical position of the blade relative to the landslide, the fore and aft positioning of the blade relative to the landslide may be variable within a range from (when viewed in plan from the top) a position level with the plough leg 14 to a position adjacent the leading edge of the landslide 28. For example, it may be preferable in some configurations to arrange a blade forwardly of the landslide and in another configurations more rearwardly of the landslide.

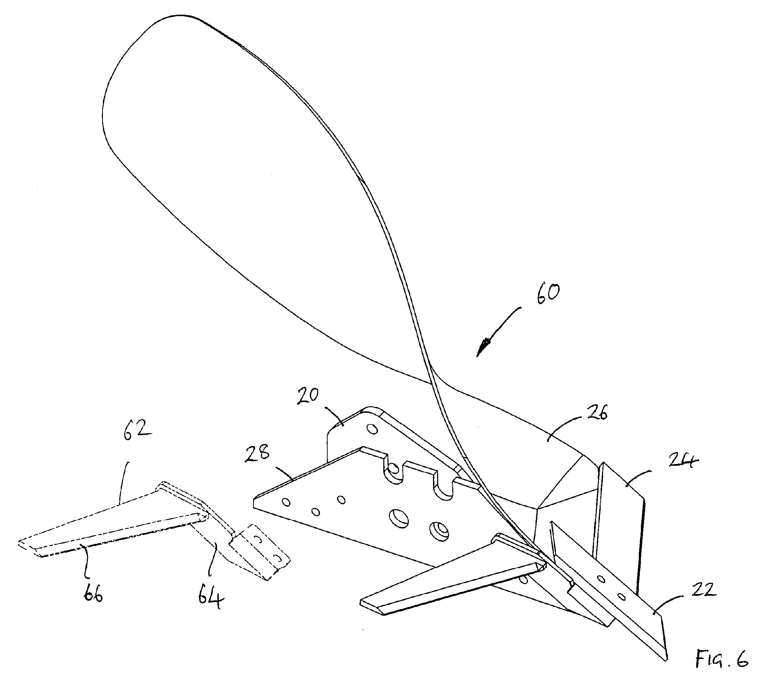

The plough 60 in Fig.6 is similar to that shown in Fig.1 and parts corresponding to parts in Fig.1 carry the same reference numerals.

The plough 60 comprises a leg (not shown), a plough foot 20, a point 22, share 24, mouldboard 26 and landslide 28.

A blade arrangement 62 comprises a blade mount 64 an a blade 66. The blade mount 64 is arranged to extend over the nose of landslide 28 and mount to the point mounting. The point 22 can itself then be mounted to the blade mount 64.

## Claims

1. A plough comprising a leg, and a point, a share, a mouldboard, a landslide and a blade all mounted directly or indirectly to the leg, the share being arranged to cut the soil on one side of the plough, the blade being arranged to cut soil on the other side of the plough, and the blade being arranged to extend from a fore-aft position level with or forward of the leg.

2. A plough according to claim 1, in which the width of soil cut by the blade is less than the width of the soil cut by the share.

3. A plough according to claim 1 or 2, in which the blade is fixedly mounted to the landslide.

4. A plough according to claim 1 or 2, in which the blade is releasably and replacably mounted to the landslide.

5. A plough comprising a plough body having upper and lower ends, the body having a point, a share extending from one side of the body, a mouldboard arranged on said one side of the body and a landslide on the other side of the body, the plough further comprising a blade arranged to cut soil on the other side of the body, the cutting edge of the share being arranged closer to the lower end of the body than the cutting edge of the blade, the blade being arranged such that the width of the soil cut by it is less than the width of the soil cut by the share.

6. A plough according to claim 5, in which the blade is mounted to the landslide, either fixedly or releasably and replacably.

7. A plough according to any preceding claim, in which the depth of the blade relative to the plough body is variable.

8. A plough according to claim 7, in which the blade and/or landslide include a plurality of mounting formations to define different mounting positions for the blade between the upper and lower end of the plough body.

9. A plough according to any preceding claim, in which the angle of the blade relative to the plough body is variable, preferably in the range of 5-15° from the horizontal.

10. A plough according to any preceding claim, in which the blade has a straight cutting edge.

11. A plough according to claim 10, in which the straight cutting edge is arranged perpendicular relative to the ploughing direction.

12. A plough according to claim 10, in which the blade is swept relative to the ploughing direction, most preferably swept rearwardly.

13. A plough according to any preceding claim, in which the width of soil cut by the blade is 40-95% of the width of soil cut by the share, preferably 70%.

14. A plough according to any preceding claim, in which the depth of cut effected by the blade is 40-95% of the depth of cut effected by the share, preferably 50%.

15. A method of ploughing soil comprising the steps of:
providing a plough having a plough body, a point, a share, a mouldboard and a blade,
drawing the plough through the soil,
penetrating soil with the point,
cutting soil on one side of the plough body with the share to a first depth and width,
pushing laterally and inverting the soil cut by the share with the mouldboard,
simultaneously with cutting the soil on said one side with the share, cutting soil on the other side of the plough body with the blade to a second depth and width, the second depth and width being less than the first depth and width respectively.
